# EUROPEAN PATENT APPLICATION

(11) **EP 1 530 368 A1**
(43) Date of publication of application: **11.05.2005**
(21) Application number: 04021828.1
(22) Date of filing: 14.09.2004
(51) Int. Cl.: H04N 5/445

(54) **Program information display method, broadcast reception apparatus, and recording apparatus**

(30) Priority: 05.11.2003 JP 2003376106
(71) Applicant: Kabushiki Kaisha Toshiba, Tokyo 105-8001 (JP)
(72) Inventor: Murakami, Masatoshi Toshiba Corporation, Tokyo 105-8001 (JP); Kataoka, Hideo Toshiba Corporation, Tokyo 105-8001 (JP); Nobe, Fujiko Toshiba Corporation, Tokyo 105-8001 (JP)
(74) Representative: Wenning, Ekkehard

(57) **Abstract**

At least one (e.g., program E) of one or more program frames is displayed to allow the user to visually confirm it. A reservation time band (T1 to T2) which does not fully match the scheduled broadcast time period (e.g., 10:00 to 11:00) of the displayed program frame, but overlaps this scheduled broadcast time period is also displayed to allow the user to visually confirm it.

## Description

The present invention relates to a display method of program information represented by an EPG (Electronic Program Guide), a broadcast reception apparatus using this program information, and a recording apparatus (a digital video recorder that uses a hard disc and/or recordable optical disc, or the like) which allows video recording reservation of programs using this program information.

More particularly, the present invention relates to a method and apparatus which display an electronic program guide (EPG) on an external monitor (TV), and allow the user to select a desired program from the displayed program guide, and to easily reserve video recording of a broadcast time period of the selected program or a desired time band that overlaps the broadcast time period in a digital video recorder which is frequently used to reserve video recordings of programs.

In recent years, since digital broadcast has begun, broadcast stations serve digital information of broadcast programs (EPG). Furthermore, the current environment allows everyone to easily acquire the latest electronic program guide (EPG) from an EPG site on the Internet. Using this electronic program guide, the user can easily reserve recording (or reserve viewing) of broadcast programs.

As a conventional recording reservation method using an electronic program guide, a technique described in Jpn. Pat. Appln. KOKAI Publication No. 10-21601 is known.

In a digital video recorder or the like, the user reserves recordings of programs, confirms the reserved contents, and corrects or deletes the reserved contents using the EPG as follows.

### <To reserve recording (or viewing) of program>

- The user displays an EPG window, moves a cursor that focuses on each program onto a program to be reserved by operating a remote controller, and presses a select button to reserve recording (or viewing) of that program.

### <To confirm reserved contents>

- A reservation list is displayed in a reservation list window.
- The EPG window displays reserved programs using different program title colors or different background patterns.

### <To correct or delete reserved contents>

- The user selects a reserved program using a cursor on the reservation list window, and corrects or delete it.

In this case, the following problems are posed.

When the reservation time bands partially overlap each other, the user must shorten one reservation time band, must delete the reserved contents, or must reserve a rerun of the program to be reserved. Commercial messages may be broadcasted before and after a program, and the program contents themselves may not overlap each other. In such case, the user may not change the reserved contents.

To make the above decision, the user must check the reserved contents and their overlapping state, and must delete reserved contents or make re-reservation depending on the checking result.

In this case, the conventional method suffers the following problems.
- It is difficult to check any overlapping.
- A reservation window is different from a correction/delete window, and the user must alternately display these windows depending on the reserved contents to be corrected.
- Complicated (non-user-friendly) cursor movement or control for respective programs and reserved fields is required.

The present invention has been made in consideration of the above situation, and has as its object to provide a program information display method, broadcast reception apparatus, and recording apparatus, which allow user-friendly operations.

With a program information display method according to one embodiment of the present invention, at least one of one or more program frames is confirmatively displayed. Note that the reservation time band which does not fully match the scheduled broadcast time period of the displayed program frame, but overlaps this scheduled broadcast time period can be displayed.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram for explaining a program information display method and an apparatus (video apparatus) using this method according to an embodiment of the present invention;
FIG. 2 is a view for explaining an example of a remote controller that can be used in the apparatus shown in FIG. 1;
FIG. 3 is a flowchart for explaining an example of a program reservation process according to the embodiment of the present invention;
FIG. 4 is a flowchart for explaining an example of the contents of a given step (step ST30) in the process shown in FIG. 3;
FIGS. 5A to 5D are views for explaining display examples (examples of a dialog box including overlapping reservation warning/selection messages) corresponding to some steps (steps ST304, ST308, ST312, ST314) in the process shown in FIG. 4;
FIG. 6 is a view for explaining an example of combinations of representative patterns (six patterns) of overlapping reservations and message patterns corresponding to these patterns;
FIG. 7 is a view for explaining a display example including overlapping reservations;
FIG. 8 is a view for explaining a display example when the user has changed the start time (T1) and end time (T2) of a program frame (program E) at a cursor position from the original scheduled broadcast time period (10:00 to 11:00) of program E by his or her operations;
FIG. 9 is a view for explaining another display example when the user has changed the start time (T1) and end time (T2) of a program frame (program E) at a cursor position from the original scheduled broadcast time period (10:00 to 11:00) of program E by his or her operation;
FIG. 10 is a view for explaining an example of display of program information according to the embodiment of the present invention (a display example of all channels for two hours);
FIG. 11 is a view for explaining another example of display of program information according to the embodiment of the present invention (a display example of all channels for eight hours); and
FIG. 12 is a view for explaining a program reservation window that displays the start time (T1) and end time (T2) of the reservation time band.

A program information display method, broadcast reception apparatus, and recording apparatus according to an embodiment will be described hereinafter with reference to the accompanying drawings.

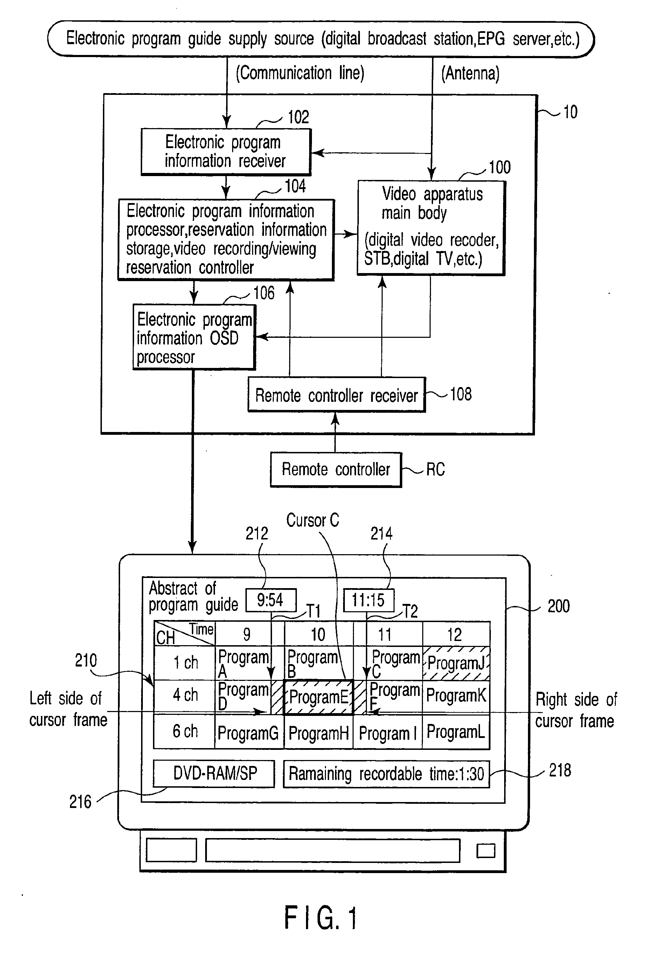

FIG. 1 is a diagram for explaining an example of apparatus 10 that adopts a program information display method according to an embodiment of the present invention, and EPG window display 200 by apparatus 10. This apparatus 10 includes: receiver 102 for receiving electronic program guide (EPG) information from an electronic program guide supply source such as a digital broadcast station, EPG server, or the like; processor/controller 104 for processing the EPG information received by receiver 102, storing the processing result, and controlling video recording or viewing reservation as needed according to the stored processing result; OSD processor 106 for composting electronic program information (EPG image) from processor/controller 104 on a video output from video apparatus main body 100 as OSD data; and remote controller receiver 108 for transmitting user's operations from remote controller RC to main body 100 and/or processor/controller 104.

An image output from OSD processor 106, which includes EPG (electronic program guide) image 210, is displayed in display window 200. This display window 200 includes cursor C which moves on EPG image 210 in accordance with cursor key operations on remote controller RC. The user can select each program frame on EPG image 210 using cursor C. In this display example, program E which is scheduled to be broadcasted today from 10:00 to 11:00 by broadcast station channel 4 (or 4ch) is selected by cursor C.

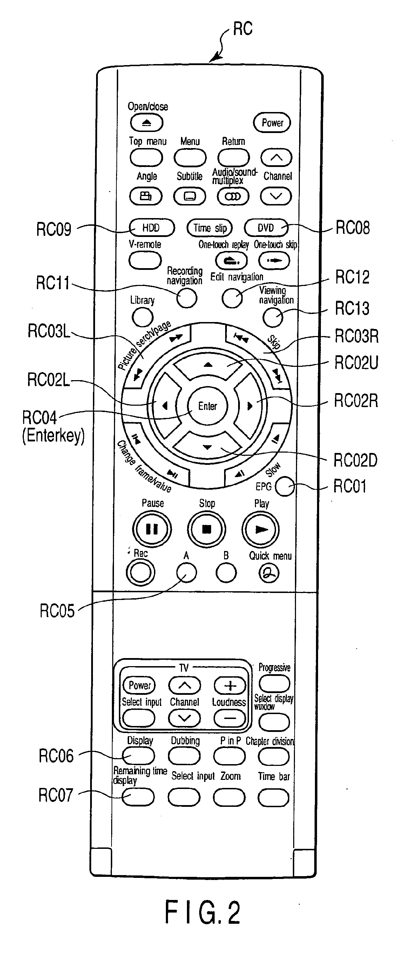

When cursor C is located on program E, if the user presses an enter key (RC04 in FIG. 2) of remote controller RC in this state, a time band from 10:00 to 11:00 is reserved as a default. The user can shift start time T1 (10:00) and/or end time T2 (11:00) back and forth according to his or her will. In the display example of FIG. 1, the user has changed reservation start time T1 to 9:54 (6 minutes earlier the default start time) and reservation end time T2 to 11:15 (15 minutes behind the default end time) for program E whose scheduled broadcast time period ranges from 10:00 to 11:00.

In the example of FIG. 1, when the user does not want to reserve full video recording of preceding program D, but wants to reserve video recording of its short broadcast contents (e.g., a prize application address, application method, or the like) which are broadcasted in the last 5 to 6 minutes of program D, this T1 change method is effective. When program E is live broadcast of a sports program, and its maximum extra broadcast time is 15 minutes, this T2 change method is effective.

T1 and T2 can be increased/decreased in 1-min increments/decrements using remote controller key RC03L or RC03R, and the increase/decrease results can be displayed on display frames 212 and 214. A hatched region displayed on the left side of the frame of cursor C shifts to the right or left in correspondence with an increase/decrease in T1, and a hatched region displayed on the right side of the frame of cursor C shifts to the right or left in correspondence with an increase/decrease in T2. These processes can be implemented by processor/controller 104 and OSD processor 106.

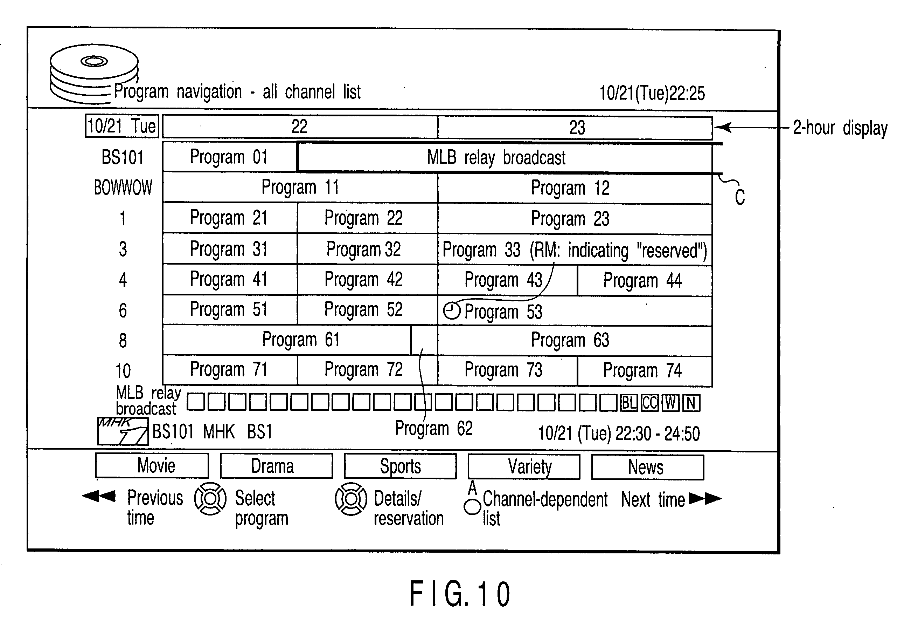

In the example of FIG. 1, the program frame of the reservation time band (a hatched region from T1 to T2 which overlaps program E) which has been changed by the user is displayed using a color, pattern, and/or three-dimensional appearance different from those of surrounding program frames. For example, when window 200 is displayed using a gray background, and program guide 210 is drawn using a black line (a region within the program frame is gray), cursor C can be drawn using a red line (in order to stand out or to make prominent). Also, the reservation time band (hatched region from T1 to T2) may be displayed using a blue frame which appears to be recessed. In this case, if another program (e.g., program J) has already been reserved, its program frame may be displayed using another color (e.g., green) or pattern (this pattern includes a case wherein timepiece mark RM indicating "reserved" is displayed within the program frame, as shown in FIG. 10).

When the user does not change the reservation time band (T1 = 10:00 and T2 = 11:00 of program E as a default), the program frame in cursor C is displayed using "blue that appears to be recessed" according to the above example.

When the user moves the cursor to another program frame after he or she reserves program E (timepiece mark RM may be displayed within the frame of program E at that time), the color of the program frame of program E is changed to, e.g., green in the same manner as program J.

In the embodiment in FIG. 1 (an example that preferentially displays the reservation time band in terms of visibility), upon setting reservation on the program guide, the designated time band (10:00 to 11:00 of program E) can be displayed on the program guide using different color, paint pattern, or the like with respect to reservation of an arbitrarily set time band (hatched region from T1 to T2).

In case of reservation for respective programs, a method of defining that reservation is set for a program band indicated by the start time and end time of a program like program J using a special color, pattern, or the like is available. By contrast, even in reservation that designates a time band including programs D, E, and F in FIG. 1, that reservation time band can be identifiably displayed using a special color, pattern, or the like.

FIG. 2 is a view for explaining an example of remote controller RC that can be used in the apparatus shown in FIG. 1. Program guide 210 in FIG. 1 can be displayed in window 200 when the user presses EPG key RC01. Cursor C on program guide 210 can be moved to the right or left for each program frame upon operation of cursor keys RC02L and RC02R. Also, cursor C can be moved up and down for each program frame upon operation of cursor keys RC02U and RC02D. When the user selects program E under cursor C for, e.g., video recording reservation, he or she need only press (i.e., turn on) enter key RC04.

The scheduled broadcast time period of program E ranges from 10:00 to 11:00 as a default. When the user wants to reserve video recording using a time period (T1 to T2) different from this scheduled broadcast time period, he or she can make the following operation. That is, when the user wants to change start time T1 from 10:00, he or she presses the right or left end of left key RC03L in a see-saw manner while the EPG window is displayed. In this way, the left side of the frame of cursor C can be moved to the right or left in, e.g., 1-min increments/decrements (FIG. 1 exemplifies a case wherein the left side of the cursor frame is moved to the left for 6 minutes to set T1 = 9:54). Likewise, when the user wants to change end time T2 from 11:00, he or she presses the right or left end of right key RC03R in a see-saw manner while the EPG window is displayed. In this way, the right side of the frame of cursor C can be moved to the right or left in, e.g., 1-min increments/decrements (FIG. 1 exemplifies a case wherein the right side of the cursor frame is moved to the right for 15 minutes to set T2 = 11:15). In this manner, video recording (or viewing) reservation of program E for one hour as a default can be changed to that for 1 hour 21 minutes from 9:54 to 11:15.

When the user has changed (or has not changed) the reserved video recording time period by the above operation, he or she may be worried if the remaining space of a disc currently used in reserved video recording is sufficient for the reservation time period. In a case like that, remote controller RC has remaining space display key RC07. When the user presses this key RC07, a remaining video recordable time period (218 in FIG. 1) is displayed in the EPG window that displays the reservation time period (T1 to T2), thus dispelling the above fear. If the disc remaining space is, e.g., 1 hour 19 minutes while the reservation time period is 1 hour 21 minutes, and the user has no auxiliary disc, the user can change the reservation time period to set, e.g., T1 = 9:56 or T2 = 11:13, or T = 9:55 and T2 = 11:14. (Such flexible reservation time setting operation cannot be implemented by the conventional method which merely selects a program frame in the EPG window using a cursor).

Note that remote controller RC shown in FIG. 2 has dedicated keys (RC03L, RC03R) used to change start time T1 and end time T2 of the reservation time band. However, a remote controller which does not have such dedicated keys can be used upon practicing the present invention. More specifically, for example, such remote controller allows the following user operation. That is, reservation start time T1 may be increased/decreased in 1-min increments/decrements by key combination of right/left key RC02L/RC02R and an "A" key below the right/left key (one of the right/left key is pressed while the "A" key is held down), and reservation end time T2 may be increased/decreased in 1-min increments/decrements by key combination of right/left key RC02L/RC02R and a "B" key below the right/left key (one of the right/left key is pressed while the "B" key is held down). Also; the following method is available. That is, start time T1 may be increased/decreased by key combination of the "A" key and right/left key RC02L/RC02R, and end time T2 may be increased/decreased by key combination of "A" key and up/down key RC02U/RC02D.

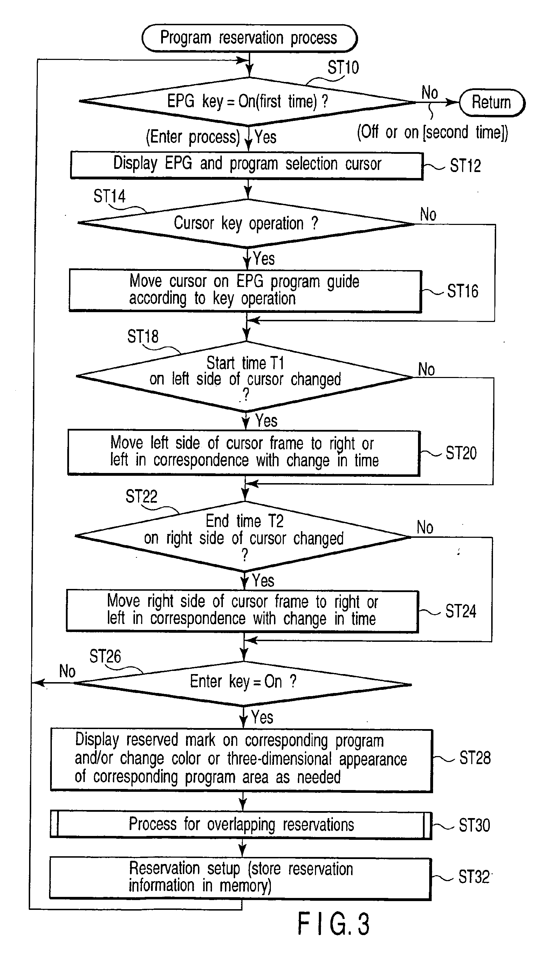

FIG. 3 is a flowchart for explaining an example of a program reservation process according to the embodiment of the present invention. This process is written as firmware in a ROM (not shown) in processor/controller 104 shown in FIG. 1. This firmware can be executed by a microcomputer (not shown) in processor/controller 104. The control can enter the process shown in FIG. 3 when the user presses, e.g., EPG key RC01 on remote controller RC in FIG. 2 (Y in step ST10). When the user presses EPG key RC01 again (N in step ST10), the control can exit the process in FIG. 3.

When the control enters the process in FIG. 3 (Y in step ST10), electronic program guide (EPG) 210 and cursor C are displayed, as exemplified on display window 200 in FIG. 1 (FIG. 1 shows an abstract of the program guide due to the limited display space). If the user has operated the cursor key of remote controller RC in this display state (Y in step ST14), cursor C moves on the EPG according to this key operation (step ST16). For example, if cursor C is initially located on the frame of program A, and the user presses right key RC 02R and down key RC02D once, the cursor moves to the frame of program E.

If the user wants to make a reservation including program E with a time period different from the scheduled broadcast time period (10:00 to 11:00 as a default) of program E, the user operates dedicated key RC03L of remote controller RC in FIG. 2 (Y in step ST18) to move the left side of the frame of cursor C to the right or left (step ST20). In the example of FIG. 1, reservation start time moves to the left for 6 minutes by the process in step ST20. The user can visually confirm this state since the left side of the reservation frame in a color different from the surrounding frames has moved. Likewise, the user operates dedicated key RC03R of remote controller RC (Y in step ST22) to move the right side of the frame of cursor C to the right or left (step ST24). In the example of FIG. 1, reservation end time T2 moves to the right for 15 minutes by the process in step ST24. The user can visually confirm this state since the right side of the reservation frame in a color different from the surrounding frames has moved.

If the user accepts the reservation time band (T1 = 9:54 to T2 = 11:15), which has been changed in this way, he or she presses enter key RC04 of remote controller RC (Y in step ST26). Then, for example, a reserved mark (timepiece mark RM in FIG. 10 or the like) may be displayed within the frame of program E or the color or three-dimensional appearance of the frame of program E may be changed as needed so as to allow the user to visually confirm that the reservation is settled by this reservation time band (T1 = 9:54 to T2 = 11:15) (step ST28).

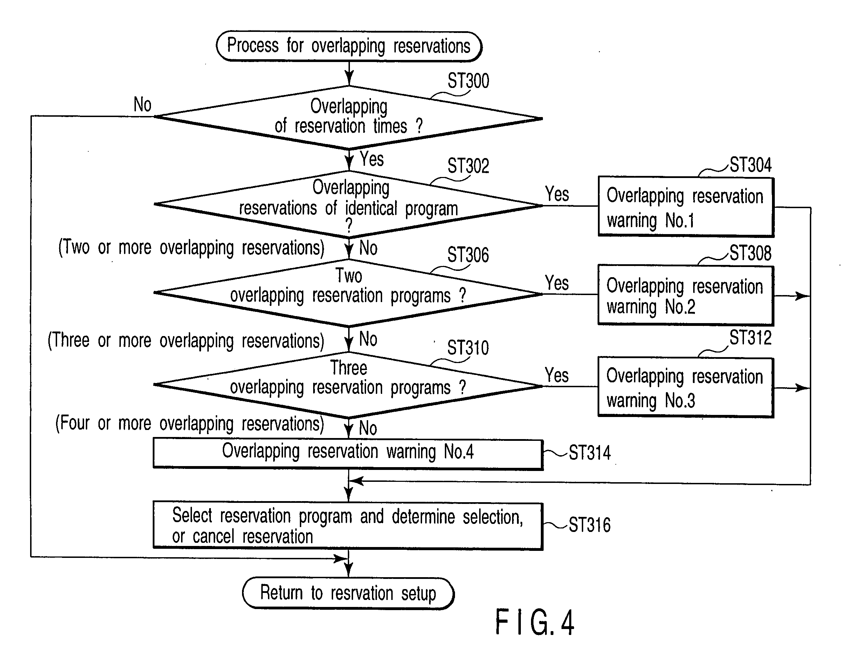

After that (or before execution of step ST28), an overlapping reservation process (to be described later with reference to FIG. 4) is executed (step ST30), and the settled reservation information is written in a memory (not shown) in processor/controller 104 in FIG. 1 (step ST32). In this manner, one reservation setup is done. By repeating steps ST12 to ST32 in FIG. 3, a plurality of reservation setups can be done.

If the user presses enter key RC04 while skipping the processes in steps ST18 to ST24, the default scheduled broadcast time period (10:00 to 11:00 for program E) at the location of cursor C at that time is reserved and set.

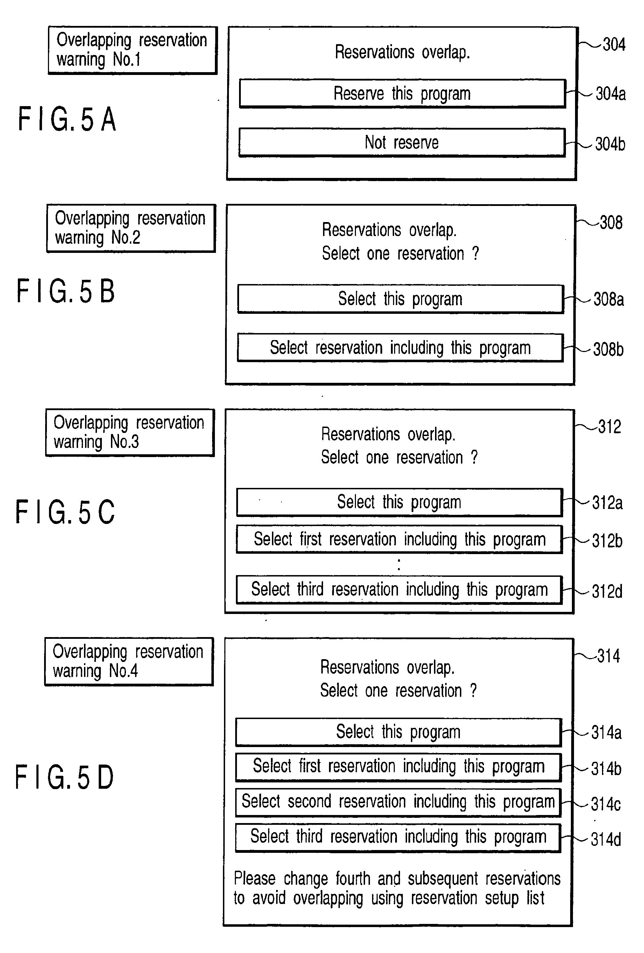

FIG. 4 is a flowchart for explaining the contents of a given step (step ST30) of the program reservation process in FIG. 3. FIGS. 5A to 5D are views for explaining display examples (examples of a dialog box including overlapping reservation warning/selection messages) corresponding to some steps (steps ST304, ST308, ST312, ST314) in the process shown in FIG. 4.

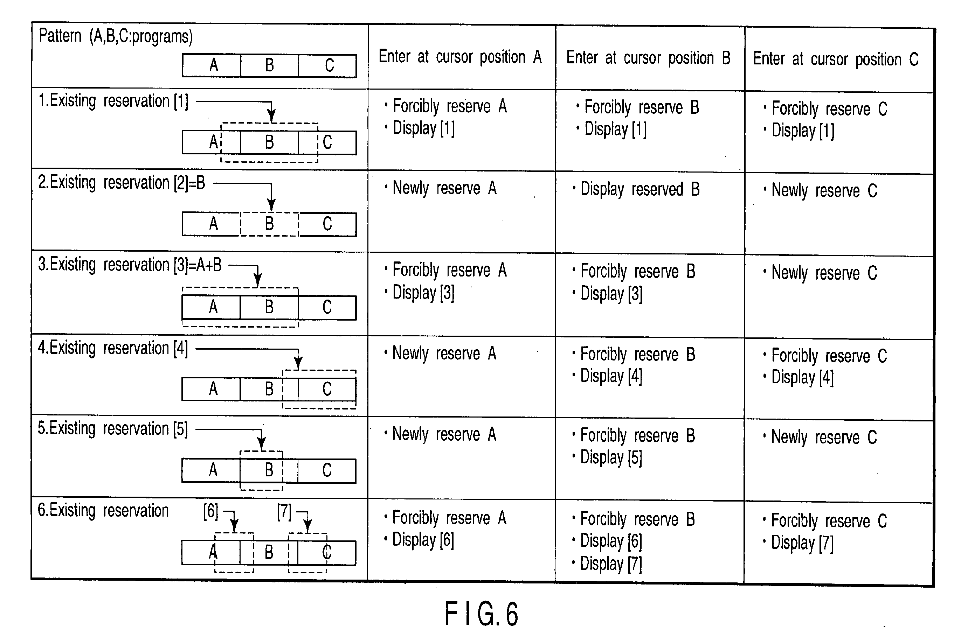

Note that overlapping reservation indicates a case wherein a given program has already been reserved, and the reservation time band of a program to be reserved partially or fully overlaps that of the already reserved program. (Note that "overlapping reservation" includes a case wherein the reservation time bands of two or more already reserved programs partially or fully overlap each other.) Since there are some patterns of overlapping reservations, processes corresponding to these patterns are executed in FIG. 4.
<1> That is, if the reservation time periods overlap each other (Y in step ST300), it is checked if an identical program is repetitively reserved (step ST302). For example, although program E has already been reserved in FIG. 1, if program E under the cursor is to be reserved again (Y in step ST302), dialog box 304 including a warning/selection message shown in FIG. 5A appears in window 200 in FIG. 1 (step ST304).
   If the user wants to proceed with reservation of program E, he or she selects message 304a in dialog box 304 by operating keys on remote controller RC, and presses enter key RC04 (step ST316). Then, program E is set again in step ST32 in FIG. 3. If the user wants to cancel that reservation, he or she selects message 304b in dialog box 304 and presses enter key RC04 (step ST316).
<2> If it is determined that an identical program is not repetitively reserved (if the number of overlapping reservation programs is two or more) (N in step ST302), it is checked if the number of overlapping reservation programs is two (step ST306). For example, if program E has already been reserved in FIG. 1, and a new time band (9:54 to 11:15) which overlaps the scheduled time band (10:00 to 11:00) of program E is to be currently reserved (Y in step ST306), dialog box 308 including warning/selection messages shown in FIG. 5B appears in window 200 in FIG. 1 (step ST308).
   If the user wants to preferentially select reservation of program E under the cursor, he or she selects message 308a in dialog box 308 by operating keys of remote controller RC and presses enter key RC04 (step ST316). Then, program E is set again in step ST32 in FIG. 3. Conversely, if the user wants to preferentially select newly designated "reservation of a time band (9:54 to 11:15) including program E", he or she selects message 308b in dialog box 308 and presses enter key RC04 (step ST316). In this case, the new time band (9:54 to 11:15) including program E is reserved and set in step ST32 in FIG. 3.
<3> If the number of overlapping reservation programs is three or more (N in step ST306), it is checked if the number of overlapping reservation programs is three (step ST310). Taking "enter at cursor position B" of "existing reservation 6" in FIG. 6 as an example, dialog box 312 including warning/selection messages shown in FIG. 5C appears in window 200 in FIG. 1 (step ST312) .
   If the user wants to preferentially select reservation of program E under the cursor, he or she selects message 312a in dialog box 312 by operating keys of remote controller RC and presses enter key RC04 (step ST316). Then, program E is set again in step ST32 in FIG. 3. In this case, reservations of programs D and F can be left as valid ones (if the user does not want to leave reservations of programs D and F, he or she can cancel them by another operation).
<4> If the number of overlapping reservation programs is four or more (N in step ST310) (although the frequency of occurrence of such case is relatively low in practical use), dialog box 314 including warning/selection messages shown in FIG. 5D appears in window 200 in FIG. 1 (step ST314).

Note that a reservation setup list (not shown) may be generated for the fourth and subsequent selection candidates, and can prompt the user to change reservations so as not to overlap each other.

The process that has been explained with reference to FIG. 3, FIG. 4, and FIGS. 5A to 5D can be applied to an apparatus (DVD recorder or the like) which has a display system on which a cursor moves for respective programs on a program guide, permits overlapping of reserved video recording time periods, and can display corresponding video recording reservations on the program guide. In such apparatus, when the user wants to set a video recording reservation using the program guide, he or she may make reservation for each program or by designating a time period. The embodiment of the present application can support both the reservation methods.

FIG. 6 summarizes an example of combinations (display example of the program guide) of representative patterns (six patterns) of overlapping reservations and message patterns corresponding to these patterns.

When the user starts an arbitrary reservation setup using the program guide, the time periods of specific programs (programs A, B, and C in the example of FIG. 6) may overlap that of the already set video recording reservation. In case of the example of FIG. 1, the reservation time band from T1 to T2 including program E partially overlaps the time periods of programs D and F in programs D, E, and F of channel 4. In this case, if programs D, E, and F in FIG. 1 are replaced by programs A, B, and C in FIG. 6, overlapping of the left side of program E corresponds to broken line frame [6] (reservation [6]) of existing reservation pattern 6 in FIG. 6, and overlapping of the right side of program E corresponds to broken line frame [7] (reservation [7]) in existing reservation pattern 6 in FIG. 6.

When "the time periods of the specific programs (programs A, B, and C) overlap that of video recording reservation", a selection message (those shown in FIGS. 5A to 5D) is displayed according to, e.g., the process shown in FIG. 4, so as to allow the user to select a program or reservation which is to undergo a reservation process, before he or she starts the reservation setup (ST32 in FIG. 3). Some practical examples will be described below according to practical operations with reference to the patterns shown in FIG. 6.

Assume that successive programs A, B, and C in a single channel are displayed on the program guide, and there are two reservations, i.e., reservation [6] set to have a time period including programs A and B, and reservation [7] set to have a time period including programs B and C.

At this time, the user selects the cursor position of program frame A when he or she wants to designate program A under the cursor or when he or she wants to select reservation [6] that overlaps program A. Hence, this embodiment provides a function of displaying messages (e.g., FIG. 5B) that prompt the user to select program A itself or reservation [6] that has already been made, and allows user's choice.

In this case, as shown in the [Enter at cursor position A] column in FIG. 6, since there is one overlapping reservation program, messages are displayed while this program = program A and a reservation including this program = reservation [6] according to display method No. 2 in FIG. 5B. Note that if reservation [2] which has a setup time period equivalent to program B (program unit on the program guide) has already been set, reservation B that has already been made may be displayed, as shown in pattern 2 in FIG. 6.

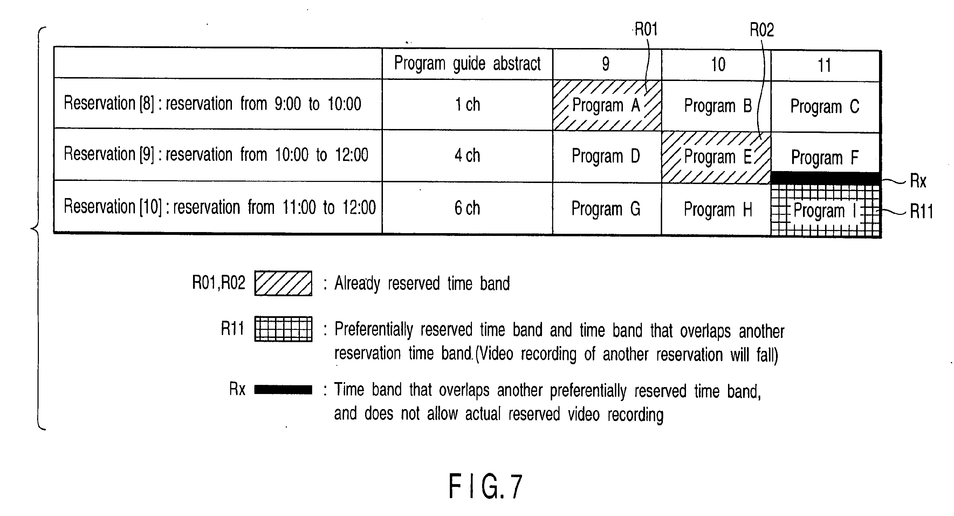

Furthermore, when a new reservation whose time period overlaps another reservation that has already been made is set, and when the recording apparatus does not permit such reservation, it is desirable to explicitly display a time band that inhibits execution of overlapping reservations on the program guide. For this purpose, display of a part that does not allow any reservation may be changed (e.g., outstanding underline RX may be added like program F in FIG. 7 to be described later).

FIG. 7 is a view for explaining a display example including overlapping reservations. In this case, reservations [9] and [10] which have already been made are displayed on the program guide, and the time bands of reservations [9] and [10] overlap each other. As shown in FIG. 7, when the reservation time band (10:00 to 12:00) of reservation [9] overlaps that (11:00 to 12:00) of reservation [10], display of an unrecordable time band (reservation time period of program F) that overlaps a recordable time band (that of program I) is changed (by drawing, e.g., bold red mark RX), so that the user can visually confirm the unrecordable time band. Also, a "preferentially reserved time band which overlaps another reservation but is handled as a recordable time band" like reservation [10] is displayed in a mode (using a special color or pattern) other than the normal mode to explicitly indicate the time band including the overlapping reservations. In this manner, the apparatus can notify the user that video recording of preferentially reserved program I will be done, but that of non-preferential program F will fail.

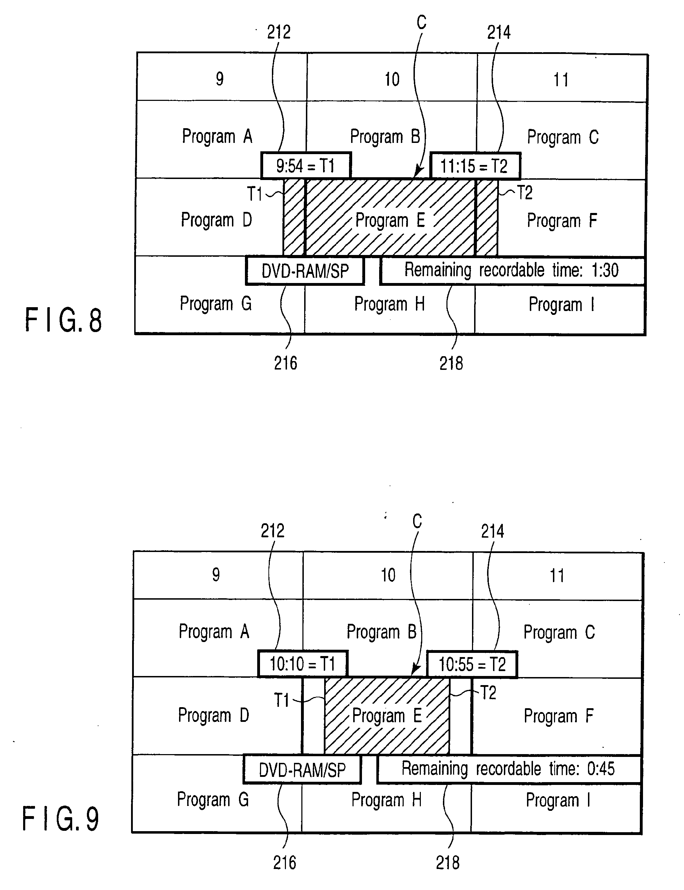

FIG. 8 is a view for explaining an example of a case wherein the user has changed the start time (T1) and end time (T2) of a program frame (program E) at a cursor position from the original scheduled broadcast time period (10:00 to 11:00) of program E by his or her operations. FIG. 1 displays a plurality of pieces of information (212 to 218) associated with reserved video recording of program E on a area other than the display area of program guide 210. However, since the user can easily visually confirm these pieces of associated information when they are displayed near cursor C to which he or she is now paying attention, FIG. 8 displays these pieces of information near cursor C as OSD data.

Note that the display modes in FIGS. 1 and 8 can be switched by pressing, e.g., display key RC06 of remote controller RC in FIG. 2. That is, when the user presses display key RC06 once while the window is displayed in the mode in FIG. 1, the window is switched to that in the mode of in FIG. 8. When the user presses display key RC06 once again, the window is returned to that in the mode of FIG. 1.

FIG. 9 is a view for explaining another example of a case wherein the user has changed the start time (T1) and end time (T2) of a program frame (program E) at a cursor position from the original scheduled broadcast time period (10:00 to 11:00) of program E by his or her operations. In this example, when the remaining time of a disc (DVD-RAM disc) used in reserved video recording is only 45 minutes, the user adjusts reservation start and end times T1 and T2 within the broadcast time range of program E so that only an exciting scene of program E is recorded on the disc.

Since the remaining time is written in management information of each individual DVD disc (DVD-RAM, DVD-RW, DVD-R, or the like) used in video recording, that information can be read out and displayed as OSD data on area 218.

FIG. 10 is a view for explaining an example of display of program information according to the embodiment of the present invention (a display example of all channels for two hours). In this case, a mark (e.g., timepiece mark RM) indicating "reserved" is added to the already video-recording reserved program. This window display (program navigation) can appear on the screen upon depression of, e.g., viewing navigation key RC13 of remote controller RC of FIG. 2.

Incidentally, in the illustration, the mark [BL] denotes "Bi-Lingual"; [cc] denotes "Closed-Caption"; [W] denotes "Wide screen"; and [N] denotes "New program."

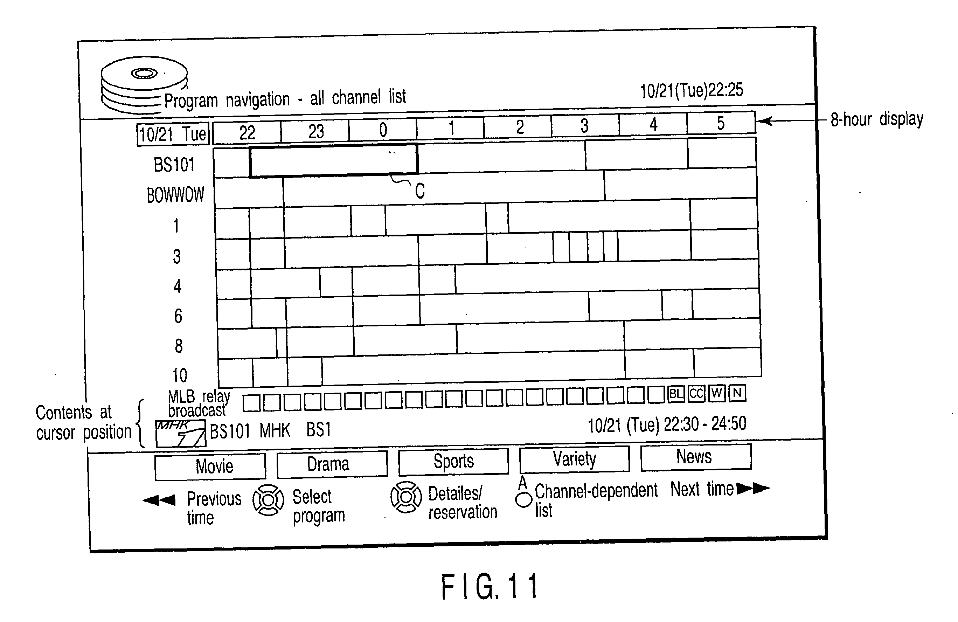

FIG. 11 is a view for explaining another example of display of program information according to the embodiment of the present invention (a display example of all channels for eight hours). When the information volume to be displayed is increased in this way, most of program title characters in respective program frames do not appear, but each program title can easily appear on a display area below the window by moving cursor C on the corresponding program frame.

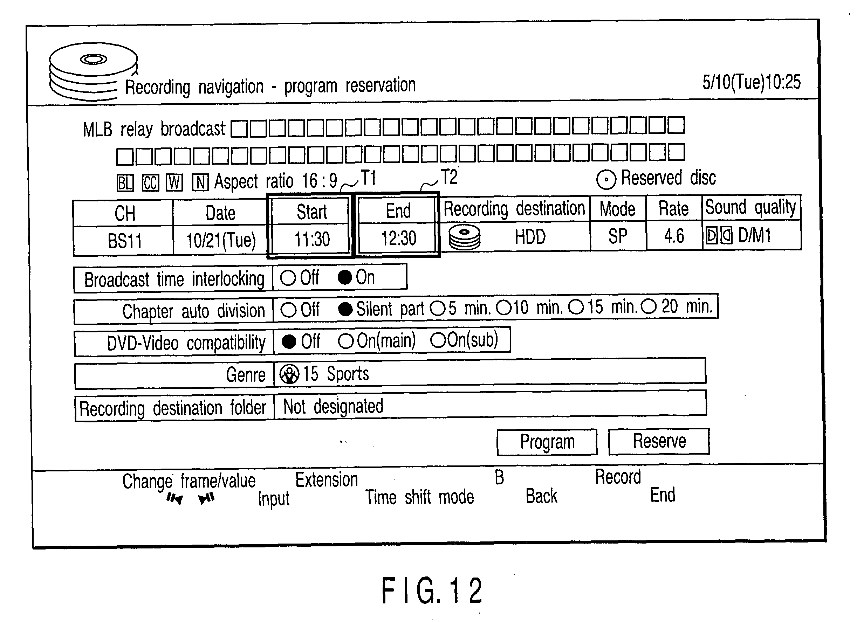

FIG. 12 is a view for explaining a program reservation window that displays the start time (T1) and end time (T2) of the reservation time band. In FIG. 1, 8, or 9, start and end times T1 and T2 of the reservation time band appear in the same window as program guide 210. However, these pieces of time information (T1, T2, and the like) may be displayed in an independent window. That is, FIG. 12 displays a list of details of programs whose video recordings have been reserved, and the user can confirm individually set start and end times T1 and T2 in this list.

### <Summary of Embodiment>

1. When the reservation time period has been changed, the reservation time band is displayed in the EPG window using a different color, pattern, or the like independently of the program frame (see the hatched portion of program E in FIG. 1).
   → Reservation time band frame preferential display.
2. When reservations overlap in the EPG window, the overlapping time band of a preferentially reserved program is displayed using a different color, pattern, or the like (see the hatched portion of program I in FIG. 7).
   → Indicate reservation which cannot be recorded due to the presence of another overlapping reservation.
3. When reservations overlap in the EPG window, the time band of a non-preferential reservation is displayed using an underbar, overbar, different color, and/or special pattern, or the like (see bold line RX of program F in FIG. 7).
   → Indicate reservation which cannot be partially or fully unrecordable.
4. When the cursor is located at the overlapping portion of the program frame (see program E in FIG. 1) and the displayed reservation time band (see T1 to T2 in FIG. 1) and the user presses the enter key there, selection candidates indicating whether the "existing reservation (T1 to T2) itself is selected or a program (program E) as a new reservation candidate is selected" (see FIG. 5B) are displayed to prompt the user to select.
   → A program (program E or the like) or reserved time band (T1 to T2) can be selected by moving the cursor for respective program frames.

### <Summary of Effects According to Embodiment>

In the embodiment of the present invention, the cursor used to select a program on the EPG window is moved for respective programs, and an identical window is used to select (reserve) programs, confirm the reservation contents, and delete/correct the reservation contents. In this way, problems "it is difficult to check the overlapping state; a reservation window is different from a correction/delete window, and the user must alternately display these windows depending on the reserved contents to be corrected; complicated cursor movement or control for respective programs and reserved fields is required" can be solved.

According to the embodiment of the present invention, seamless program reservation, confirmation, correction, and deletion operations can be done on a single window, since the single window is used to select (reserve) programs, confirm the reservation contents, and delete/correct the reservation contents while adopting user-friendly, easy-to-control cursor movement in video recording reservations using the EPG window.

The present invention is not limited to the aforementioned embodiments, and various modifications may be made without departing from the scope of the invention when it is practiced.

Furthermore, the embodiments include inventions of various stages, and various inventions can be extracted by appropriately combining a plurality of disclosed required constituent elements. For example, even when one or a plurality of required constituent elements are omitted from all required constituent elements described in the embodiment, an arrangement from which the required constituent elements are omitted can be extracted as an invention as long as at least one of the effects upon practicing the present invention can be obtained.

More specifically, an apparatus that uses the display method according to the embodiment of the present invention may comprise hardware of a monitor screen which is used to make display (in case of a TV), but may send only a display output to an external monitor and need not comprise hardware of a monitor screen (in case of a standalone device such as a tuner, recorder, or the like).

According to the present invention, the user can easily understand video recording reservation operations and the like using the EPG window.

## Claims

1. A method of displaying an electronic program guide (210 in FIG. 1) including one or more program frames, **characterized by** comprising:
displaying at least one of the one or more program frames so as to allow a user to visually confirm the displayed program frame; and
displaying a reservation time band (T1 to T2) which does not fully match a scheduled broadcast time period of the displayed program frame, but overlaps this scheduled broadcast time period, so as to allow the user to visually confirm that reservation time band.

2. A method according to claim 1, **characterized in that** at least one of a start time (T1) and an end time (T2) of the reservation time band is displayed in a predetermined area.

3. A method according to claim 1, **characterized by** further comprising:
displaying at least one of the one or more program frames to stand out by a predetermined cursor; and
displaying at least one of a start time and an end time of the reservation time band in the vicinity of the cursor or in the same field of view as the cursor.

4. A method according to claim 1, **characterized in that** the electronic program guide includes a plurality of program frames, and the method is configured to allow reservation of at least one of the program frames, and
the method comprises making, when a reservation of a given program frame overlaps a reservation of the reservation time band, a display (FIGS. 5A to 5D) that prompts the user to select one of the overlapping reservations.

5. A method according to claim 1, **characterized in that** said electronic program guide includes a cursor which can move on the electronic program guide for respective program frames, further comprising:
displaying, when the cursor is located at an overlapping portion of the program frame and the reservation time band, selection candidates (FIGS. 5A to 5D) indicating whether the program frame at a position of the cursor is selected or the reservation time band at the position of the cursor is selected.

6. A method of reserving a scheduled broadcast time period of the program frame or the reservation time band selected from the displayed selection candidates using a method of claim 5.

7. A method according to claim 1 or 5, **characterized in that** the electronic program guide includes a plurality of program frames, and the method is configured to allow reservations of two or more program frames, and
the method comprises making, when reservation time bands of the two or more program frames overlap each other, and one of the program frames has a reservation setup in preference to the other program frame, a display (Rx in FIG. 7) indicating that the reservation is not executed at the display position of the other program frame.

8. A method according to claim 1 or 5, **characterized in that** the electronic program guide includes a plurality of program frames, and the method is configured to allow reservations of two or more program frames, and
the method comprises changing, when reservation time bands of the two or more program frames overlap each other, and one of the program frames has a reservation setup in preference to the other program frame, appearance of the program frame having the preferential reservation setup from that before the preferential reservation setup (FIG. 7).

9. A method according to claim 1 or 5,
**characterized by** further comprising changing, when a reservation time band of the program frame is changed, appearance of the reservation time band after the change from that before change (FIG. 7).

10. A broadcast reception apparatus **characterized by** comprising:
a receiver (102) for receiving an electronic program guide including one or more program frames;
a processor (104, 106) for executing a display process of at least one of the one or more program frames, and executing a display process of a reservation time band which does not fully match a scheduled broadcast time period of the program frame that has undergone the display process, but overlaps this scheduled broadcast time period; and
an arrangement (100) for receiving a program to be broadcasted in the scheduled broadcast time period of the program frame that has undergone the display process, or the reservation time band.

11. A recording apparatus **characterized by** comprising:
a receiver (102) for receiving an electronic program guide including one or more program frames;
a processor (104, 106) for executing a display process of at least one of the one or more program frames, and executing a display process of a reservation time band which does not fully match a scheduled broadcast time period of the program frame that has undergone the display process, but overlaps this scheduled broadcast time period; and
an recorder unit (100) for recording a program to be broadcasted in the scheduled broadcast time period of the program frame that has undergone the display process, or the reservation time band.
